# EUROPEAN PATENT SPECIFICATION

(11) **EP 1 522 072 B1**
(45) Date of publication and mention of the grant of the patent: **29.04.2009**
(21) Application number: 03735903.1
(22) Date of filing: 27.06.2003
(51) Int. Cl.: G11B 23/00, G11B 23/03, G11B 27/11, G06F 1/00

(54) **MEDIA DRIVE CLAMPING DEVICE PROVIDED WITH COMMUNICATION MEANS**
KLEMMVORRICHTUNG EINES LAUFWERKS AUSGESTATTET MIT EINEM KOMMUNIKATIONSMITTEL
DISPOSITIF DE SERRAGE DE LECTEUR DE SUPPORT OPTIQUE DOTE D'UN MOYEN DE COMMUNICATION

(30) Priority: 08.07.2002 EP 02077714
(43) Date of publication of application: 13.04.2005
(73) Proprietor: Koninklijke Philips Electronics N.V., 5621 BA Eindhoven (NL)
(72) Inventor: KAHLMAN, Josephus, A., H., M., NL-5656 AA Eindhoven (NL); ROSMALEN, Gerard, E., NL-5656 AA Eindhoven (NL)
(74) Representative: Uittenbogaard, Frank
(86) International application number: PCT/IB2003/002727
(87) International publication number: WO 2004/006256

(56) References cited:
- US-A- 5 540 800
- US-A- 6 044 046
- US-B1- 6 249 259

## Description

The invention relates to an apparatus provided with communication means for obtaining an electromagnetic coupling with an antenna on an information carrier, and provided with a carrier body and a pressure body between which said information carrier can be clamped, a bridge in which the pressure body can move freely, and a second antenna which is connected to the communication means.

Many information carriers are on the market nowadays on which data can be distributed. These information carriers are often optical discs such as CDs, CD-ROMs, or DVD-ROMs nowadays. Such discs may be used for storing and filing comparatively large quantities of data in a simple manner, for example digital photos, films, and music albums. A sufficient amount of equipment is available on the consumer market by this time enabling individuals to create their own CD compilations, but also to make copies of existing CD, CD-ROM, or DVD-ROM discs. The data, the digital file, on the CDs is often protected by copyright. Royalties are normally paid to the owner of the digital work stored on the relevant information carrier for each CD that is sold. The illegal copying and distributing of these digital works has the result that, for example, artists, producers, and software developers are bereft of much income. Digital media publishers raise the alarm for counteracting the illegal copying of these items protected by copyright.

One of the systems devised as a solution to the above copying problem is the encoding of the digital work by means of coding keys and the addition of digital user rights. The digital user rights, for example, impose restrictions on the maximum number of times a CD can be copied, or the maximum number of times a CD can be played back. It is not possible to reproduce the digital work on an apparatus suitable for this without the correct user rights and decoding keys.

The decoding keys and the user rights are supplied along with the digital work during purchase. These keys and user rights may be stored in the wobble of the information carrier, so that copying of the key is not possible. It is also possible to hide these keys in so-termed hidden channels of the information carrier.

Another possibility that is increasingly taken into consideration is the storage of the decoding keys and the user rights for the digital work in a separate memory which is fastened on the information carrier. This separate memory is, for example, an integrated circuit which can communicate via communication means with the player of the information carrier so as to transmit the correct decoding key. The information in the integrated circuit is specific to the digital work stored on the information carrier.

Such a system, in which an integrated circuit or chip is provided on an information carrier with the object of storing additional information, such as user rights, separately from the actual information, is known from US patent US 6,044,046. This chip is provided with electromagnetic receiver means for obtaining the energy required for the operation of the chip. Furthermore, electromagnetic transmitter and receiver means are present on the chip of the information carrier so as to render possible a communication between the chip and the playback device.

Communication means rendering possible this communication are present in the playback apparatus. The communication means in the apparatus comprise an integrated circuit, a so-called read-out IC, and an antenna.

The apparatus further comprises optical reading means which are capable of reading the information from the information carrier. These reading means in the known system of an optical information carrier are formed by a laser source and the necessary optics and processing means.

It is a disadvantage of the known information carrier that the electromagnetic communication between the chip and the IC present in the playback apparatus is not optimal.

It is an object of the invention to provide an apparatus of the kind mentioned in the opening paragraph which promotes a good communication between the chip and the read-out IC.

This object is achieved with a bridge according to claim 1.

The invention is based on the recognition that eddy currents arise in the metal bridge adjacent the antenna of the communication means in the apparatus provided with the communication means for achieving an electromagnetic coupling with the chip on the information carrier.

The coiled antenna of the communication means generates a magnetic field when it passes a current. The change in magnetic flux generates an electric field in accordance with Faraday's law. This electric field is also induced in the metal layer immediately above the antenna. This results in a movement of free charge carriers in the metal following the direction of the electric field. Circular currents are generated in this manner, the eddy currents. These currents create a magnetic field in opposite direction (Lenz's law), which causes the total magnetic flux to decrease significantly.

The eddy currents adversely affect the coupling and thus the communication between the chip and the read-out IC. This can be partly prevented in that the metal layer of the bridge is at least partly removed at the level of the antenna, so that no eddy currents can arise in this region.

The system of the kind mentioned in the opening paragraph is characterized in that the bridge is partly free from metal at the level of the second antenna.

These and other aspects of the apparatus and the system according to the invention will be explained in more detail below with reference to drawings, in which:
Fig. 1 is a diagrammatic plan view of an embodiment of the information carrier,
Fig. 2 is a diagrammatic cross-sectional view of an embodiment of the system comprising an information carrier and an apparatus,
Fig. 3 is a diagrammatic plan view of the bridge and the pressure body of the apparatus according to the invention,
Fig. 4 is a diagrammatic lateral sectional view of the bridge and the pressure body taken on the line IV-IV in Fig. 3,
Fig. 5 is a diagrammatic lateral sectional view of the bridge and the pressure body taken on the line V-V in Fig. 3,
Fig. 6 is a diagrammatic plan view of an embodiment of the bridge and the pressure body of the apparatus according to the invention, and
Fig. 7 is a circuit diagram of the communication means of the apparatus and the chip and antenna on the information carrier.

The Figures are diagrammatic and not drawn to scale, and corresponding components have been given the same reference numerals. Furthermore, the mutual dimensional ratios of the components have not been necessarily exactly depicted in the Figures for reasons of clarity, where applicable. It will be clear to those skilled in the art that alternative but equivalent embodiments of the invention are possible without departing from the essence of the invention, and that the scope of the invention is limited by the claims only. Thus the embodiments described below relate to an information carrier with an integrated circuit, such as a CD. It will be obvious that the principles of the invention may be equally well applied to other rotating information carriers such as CD-R, DVD, DVD+ RW, CD-I, and other members of the family of optical information carriers. It will also be obvious to those skilled in the art that the description given below of embodiments of a playback apparatus is also applicable to a recording apparatus for writing on the optical storage unit.

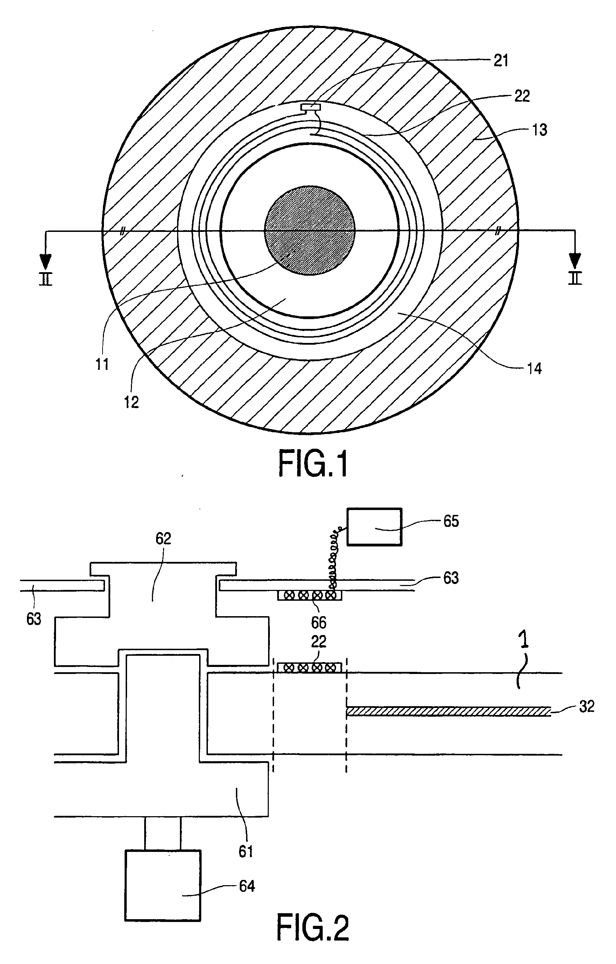

Fig. 1 shows the information carrier that can be read out by the apparatus according to the invention. The information carrier in this example is a disc with an optically readable storage unit. The information carrier 1 is provided with a center hole 11 situated in the center of the disc. Several areas are defined on the information carrier 1, furthermore, which areas may each have, for example, different physical properties. The disc comprises a clamping area 12 which is used for clamping the disc between two bodies. This clamping renders it possible for the disc to move and rotate about the center of the disc in a contactless manner. This will be described in more detail below when the system is discussed. Furthermore, an information area 13 is defined on the disc, where the optically readable storage unit is present. This storage unit comprises a track which is arranged in a spiraling or concentric pattern. It is possible to read the track on the information carrier by means of a read head known to those skilled in the art. The read head comprises inter alia an optical system for focusing a light beam, for example generated by a laser diode. The optical storage unit is built up from several layers, among them a polycarbonate layer and a metal layer. A transitional region 14 is present between the clamping area 12 and the information area 13. The transitional region 14 is also constructed with the polycarbonate layer and the metal layer in the prior art. The transitional region 14 is denoted the CiD region hereinafter.

The optical information carrier 1 further comprises an integrated circuit 21 and an antenna 22 which is connected to the integrated circuit (denoted chip hereinafter) 21. An embodiment of the information carrier with the chip and the antenna shown in the CiD region can be seen in Fig. 2. The antenna is preferably a coiled antenna. The antenna is always located in the CiD region. There are no limitations as to the positioning of the chip, for example, it is possible to position the chip in the information area, but the CiD region is preferred. The chip is, for example, a MiFare RFID chip manufactured by Philips Electronics N.V. and is also described in the RFID HANDBOOK, p. 282 by Klaus Finkenzeller, published by John Wiley & Sons.

The chip provides the possibility of storing information. This information may be, for example, a decoding key for decoding the digital work stored in coded form on the information carrier. The illegal copying and distribution of the digital work on the information carrier is rendered more difficult through the provision of the decoding keys in a separate memory, and not on the information carrier itself. Another example of the use of the storage capacity in the chip is the storage of a table of contents. This table of contents may comprise all titles and performing artists of musical numbers stored on the information carrier in the case in which the digital work comprises, for example, a plurality of music albums. This information in the chip may then be read out, for example, and displayed on a screen.

The chip and the antenna are capable of achieving an electromagnetic coupling to another antenna connected to a read-out IC in a playback apparatus, as will be explained in more detail in the discussion of the system.

To promote the communication between the chip on the disc and the read-out IC, no metal layer is present in the CiD region. The metal layer is shown hatched in the plan view of an embodiment of the information carrier in Fig. 1. No eddy currents interfering with the electromagnetic coupling will arise because no metal layer is present adjacent the antenna.

Fig. 2 is a diagrammatic cross-sectional view of an embodiment of a system comprising the information carrier and an apparatus. The apparatus comprises inter alia reading means (not shown), for example a read head for reading out information from the optical storage unit. The apparatus further comprises a carrier body 61 on which the information carrier 1 can be laid. A pressure body 62 is subsequently fastened on the information carrier 1 so as to clamp the information carrier. The carrier body has a shaft that is passed through the center hole of the information carrier 1. The pressure body is fastened to the shaft of the carrier body. In this configuration, therefore, the information carrier is between the carrier body 61 and the pressure body 62. The information carrier makes contact with the carrier body and the pressure body in the clamping area of the information carrier. The pressure body is positioned in a bridge 63 in which it can move freely in the direction of the carrier body and can rotate about the axis of the carrier body. Furthermore, the apparatus comprises an electric motor 64 which is fastened to the carrier body and is arranged such that the information carrier 1 rotates in the apparatus, as is known to those skilled in the art.

The apparatus further comprises communication means for establishing an electromagnetic coupling with an information carrier 1 provided with an antenna and a chip as described above and shown in Fig. 1. The communication means of the apparatus comprise a read-out IC 65 and another antenna 66. The read-out IC is, for example, a MiFare RFID ReaderIC manufactured by Philips Electronics N.V. and is also described in the cited RFID HANDBOOK by Klaus Finkenzeller. This ReaderIC operates at 13.56 MHz, which corresponds to a wavelength of the electromagnetic waves of approximately 22 m. Since the distance between the two antennas is many times smaller than 22 m, all may be regarded as magnetic flux. The antenna 66 of the communication means in the apparatus is connected to the ReaderIC and has a coil-type or concentric character.

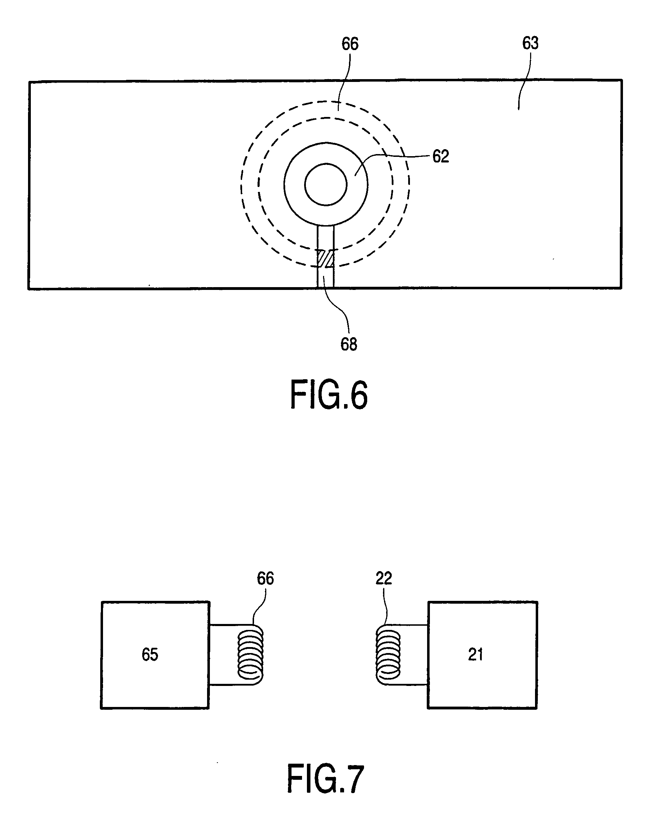

The antenna 66 of the communication means of the apparatus is preferably arranged perpendicularly above the antenna on the information carrier so as to obtain an optimum coupling. This coupling must be achieved inter alia when the information carrier is in the apparatus and the optical storage unit of the information carrier is being read out. The antenna in the apparatus may be fastened, for example, to the bridge 63 perpendicularly above the antenna on the information carrier as shown in Fig. 6. It will be clear to those skilled in the art that alternative embodiments are also possible.

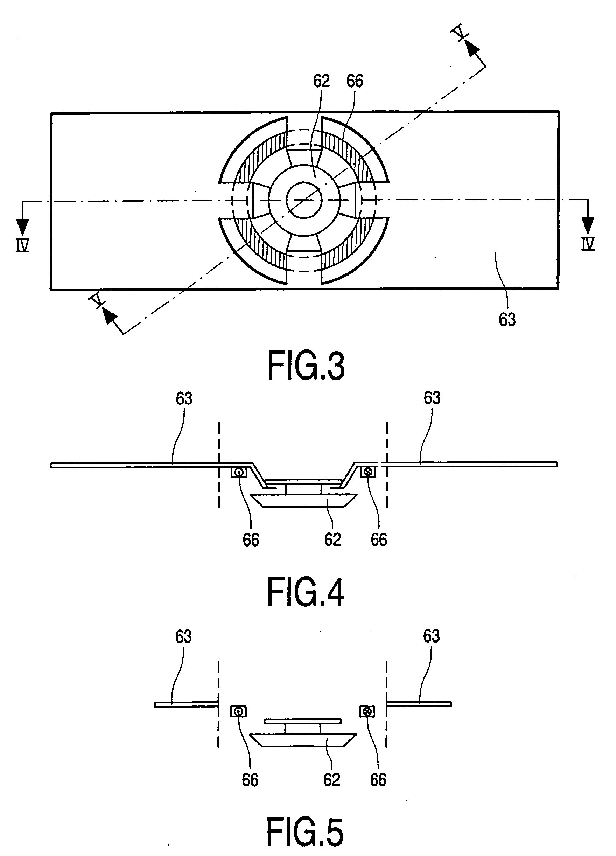

Fig. 3 shows an embodiment of the bridge and the pressure body of the apparatus according to the invention. The metal bridge 63 supports the pressure body 62. Fastened under the bridge there is the antenna 66 of the communication means. This antenna is concentric. The pressure body clamps the information carrier in axial direction over the shaft of the carrier body. In this embodiment of the invention, the bridge is provided with recesses which are radial as viewed away from the shaft of the pressure body. These recesses are arranged axially with respect to the antenna. Since there is no closed path of metal present in the vicinity of the antenna, no eddy currents will occur that adversely affect the communication between the chip and the read-out IC.

Fig. 4 is a diagrammatic lateral sectional view of the bridge and the pressure body taken on the line IV-IV in Fig. 3.

Fig. 5 is a diagrammatic lateral sectional view of the bridge and the pressure body taken on the line V-V in Fig. 3.

Fig. 6 is a diagrammatic plan view of an embodiment of the bridge and the pressure body of the apparatus according to the invention. The bridge is interrupted by a radial groove 68 in this embodiment. The bridge is at least partly free from metal axially opposite the second antenna.

Fig. 7 is a circuit diagram of the communication means of the apparatus and the chip and antenna on the information carrier. As is known to those skilled in the art, a current changing in time through a first coil will generate a magnetic flux which also changes in time. The inductance law states that a voltage will be induced in the first coil, but also in a second coil if the latter comprises a portion of the generated magnetic flux.

The changing magnetic flux in the antenna 66 connected to the read-out IC 65 induces a voltage in the antenna 22 connected to the chip 21 on the information carrier 1 owing to the mutual induction. Communication can thus take place between the chip on the information carrier and the read-out IC in the apparatus by means of electromagnetic coupling.

## Claims

1. A metal bridge (63) for an apparatus comprising communication means (65) for obtaining an electromagnetic coupling between a first antenna (22) on an information carrier (1) and a second antenna (66) coupled to the communication means (65), an information carrier support body (61), and a pressure body (62) for clamping the information carrier (1) in an axial direction, which bridge (63) serves to support the pressure body (62), **characterized in that** said bridge (63) is partly free from metal in a position axially opposed to the second antenna (66) in order to limit the formation of circular electric currents in the bridge.

2. A bridge (63) as claimed in claim 1, **characterized in that** the portion of the bridge (63) that is partly free from metal comprises at least one radial interruption.

3. A bridge (63) as claimed in claim 1, **characterized in that** the portion of the bridge that is partly free from metal comprises a groove in radial direction.

4. An apparatus comprising communication means for obtaining an electromagnetic coupling between a first antenna (22) on an information carrier (1) and a second antenna (66) coupled to the communication means (65), an information carrier support body (61) and a pressure body (62) for clamping the information carrier (1) in axial direction and further comprising the bridge of claim 1.

5. An apparatus as claimed in claim 4, **characterized in that** the portion of the bridge that is at least partly free from metal comprises at least one radial interruption.

6. An apparatus as claimed in claim 4, **characterized in that** the portion of the bridge that is at least partly free from metal comprises a groove in radial direction.

## Patentansprüche

1. Metallbrücke (63) für ein Gerät mit Kommunikationsmitteln (65) zum Erhalten einer elektromagnetischen Kopplung zwischen einer ersten Antenne (22) auf einem Informationsträger (1) und einer mit den Kommunikationsmitteln (65) gekoppelten zweiten Antenne (66), einem Informationsträgerstützkörper (61) und einem Druckkörper (62) zum Einklemmen des Informationsträgers (1) in axialer Richtung, wobei die Brücke (63) dazu dient, den Druckkörper (62) zu stützen, **dadurch gekennzeichnet, dass** die Brücke (63) in einer Position axial gegenüber der zweiten Antenne (66) teilweise metallfrei ist, um die Bildung von elektrischen Kreisströmen in der Brücke zu begrenzen.

2. Brücke (63) nach Anspruch 1, **dadurch gekennzeichnet, dass** der Abschnitt der Brücke (63), der teilweise metallfrei ist, zumindest eine radiale Unterbrechung umfasst.

3. Brücke (63) nach Anspruch 1, **dadurch gekennzeichnet, dass** der Abschnitt der Brücke (63), der teilweise metallfrei ist, eine Rille in radialer Richtung umfasst.

4. Gerät mit Kommunikationsmitteln (65) zum Erhalten einer elektromagnetischen Kopplung zwischen einer ersten Antenne (22) auf einem Informationsträger (1) und einer mit den Kommunikationsmitteln (65) gekoppelten zweiten Antenne (66), einem Informationsträgerstützkörper (61) und einem Druckkörper (62) zum Einklemmen des Informationsträgers (1) in axialer Richtung und weiterhin mit der Brücke von Anspruch 1.

5. Gerät nach Anspruch 4, **dadurch gekennzeichnet, dass** der Abschnitt der Brücke, der zumindest teilweise metallfrei ist, zumindest eine radiale Unterbrechung umfasst.

6. Gerät nach Anspruch 4, **dadurch gekennzeichnet, dass** der Abschnitt der Brücke, der zumindest teilweise metallfrei ist, eine Rille in radialer Richtung umfasst.

## Revendications

1. Pont métallique (63) pour un appareil comprenant des moyens de communication (65) afin d'obtenir un couplage électromagnétique entre une première antenne (22) sur un support d'information (1) et une et une deuxième antenne (66) qui est couplée aux moyens de communication (65), un corps d'appui (61) du support d'information et un corps de pression (62) pour serrer le support d'information (1) dans une direction axiale, lequel pont (63) sert à appuyer le corps de pression (62), **caractérisé en ce que** ledit pont (63) est partiellement exempt de métal dans une position qui est axialement opposée à la deuxième antenne (66) afin de limiter la formation de courants électriques circulaires dans le pont.

2. Pont (63) selon la revendication 1, **caractérisé en ce que** la partie du pont (63) qui est partiellement exempte de métal comprend au moins une interruption radiale.

3. Pont (63) selon la revendication 1, **caractérisé en ce que** la partie du pont qui est partiellement exempte de métal comprend une rainure dans la direction radiale.

4. Appareil comprenant des moyens de communication pour obtenir un couplage électromagnétique entre une première antenne (22) sur un support d'information (1) et une deuxième antenne (66) qui est couplée aux moyens de communication (65), un corps d'appui (61) du support d'information et un corps de pression (62) pour serrer le support d'information (1) dans la direction axiale et comprenant encore le pont de la revendication 1.

5. Appareil selon la revendication 4, **caractérisé en ce que** la partie du pont qui est au moins partiellement exempte de métal comprend au moins une interruption radiale.

6. Appareil selon la revendication 4, **caractérisé en ce que** la partie du pont qui est au moins partiellement exempte de métal comprend une rainure dans la direction radiale.
